# EUROPEAN PATENT SPECIFICATION

(11) **EP 4 234 954 B1**
(45) Date of publication and mention of the grant of the patent: **09.07.2025**
(21) Application number: 23158365.9
(22) Date of filing: 23.02.2023
(51) Int. Cl.: F16B 5/06

(54) **FASTENER CLIP ASSEMBLY WITH LOCKING ARMS**
BEFESTIGUNGSKLAMMERANORDNUNG MIT VERRIEGELUNGSARMEN
ENSEMBLE ATTACHE DE FIXATION AVEC BRAS DE VERROUILLAGE

(30) Priority: 27.02.2022 US 202263314474 P; 07.02.2023 US 202318106991
(43) Date of publication of application: 30.08.2023
(73) Proprietor: Termax Company, Lake Zurich, IL 60047 (US)
(72) Inventor: DICKINSON, Daniel James, LINCOLNSHIRE, 60069 (US); FRIESORGER, David, MCHENRY, 60050 (US)
(74) Representative: Weinstein Services & Conseils

(56) References cited:
- US-A- 4 850 773
- US-B2- 9 670 947

## Description

### Background

The invention relates generally to devices for fastening together two or more objects. A number of devices and fasteners are currently available for fastening objects, such as body panels and automobile interior trim piece panels to the chassis of a vehicle, for example. In some embodiments, a body panel may refer to, for example, any interior or exterior body panel on a vehicle, a plastic interior trim piece, headliner, or any interior trim piece. Additionally, the panel may be any suitable exterior body panel, such as a fender, bumper, quarter panel, or door panel. The chassis of the vehicle may include any substrate, plate, body panel, structural framework, chassis component or subcomponent, wall, or any suitable object. Publication US 9,670,947 discloses a trim retainer assembly having a clip portion with a base and a molded housing having a keyhole and an opening.

### Brief Description of the Drawings

Other objects and advantages of the invention may become apparent upon reading the detailed description and upon reference to the accompanying drawings.
Figure 1 is an exploded view of a fastener clip assembly, in accordance with some embodiments.
Figure 2 is an exploded view of a fastener clip assembly, a body panel, and a chassis, in accordance with some embodiments.
Figure 3 is a view of a cap of a fastener clip assembly, in accordance with some embodiments.
Figure 4 is a view of a pin of a fastener clip assembly with a locking panel attachment, in accordance with some embodiments.
Figure 5 is a view of a fastener clip assembly in locked position, in accordance with some embodiments.
Figure 6 is an assembled view of a fastener clip assembly prior to engaging a panel, in accordance with some embodiments.
Figure 7 is an assembled view of a fastener clip assembly in an engaged position on a panel, in accordance with some embodiments.

While the invention is subject to various modifications and alternative forms, specific embodiments thereof are shown by way of example in the drawings and the accompanying detailed description. It should be understood, however, that the drawings and detailed description are not intended to limit the invention to the particular embodiments. This disclosure is instead intended to cover all modifications, equivalents, and alternatives falling within the scope of the present invention as defined by the appended claims.

### Detailed Description

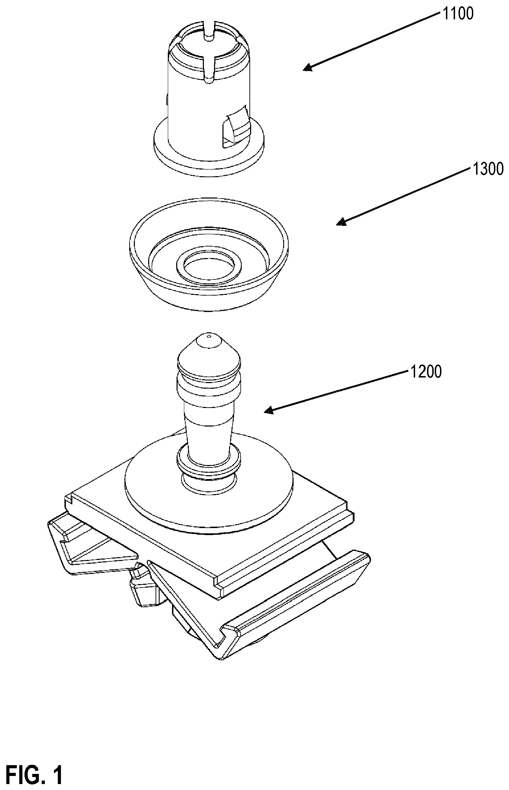

Figure 1 is an exploded view of a fastener clip assembly, in accordance with some embodiments.

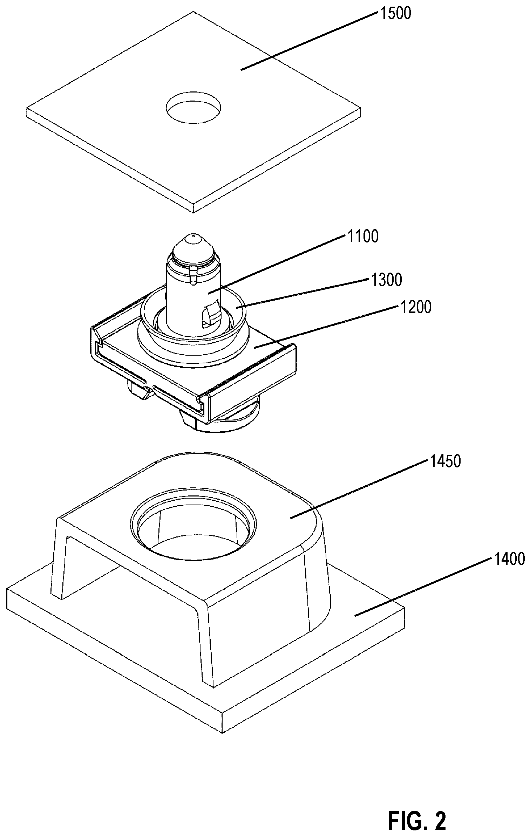

Figure 2 is an exploded view of a fastener clip assembly, a body panel, and a chassis, in accordance with some embodiments.

In some embodiments, the fastener clip assembly comprises cap/grommet 1100 and pin/pin retainer 1200. Pin 1200 is configured to engage and secure itself on cap 1100 based at least upon cap 1100 being configured to fit over pin 1200 and into an interlocked position for the pin and the cap.

The cap/pin assembly may be configured to attach to a slot/hole in chassis 1500 on one end by attaching the cap to the chassis slot and the pin to the cap, for example. On the other end, the assembly may be configured to attach to a doghouse or similar object in panel 1400. Pin 1200 may be configured to be coupled to a doghouse by being pressed into a slot in doghouse 1450 of panel 1400, for example. In some embodiments, the doghouse may be coupled to panel 1400 by various means such as an adhesive, the doghouse may be molded onto panel 1400, etc.

In some embodiments, the two-piece assembly may be configured to retain various trim panels (such as panel 1400) to a car chassis (such as chassis 1500), for example, based at least upon the two-piece assembly being configured to couple to both the panel and the chassis. It should be noted that the fastener clip assembly may be configured to join various other comparable pairs of objects to each other.

In some embodiments, optional seal component 1300 is configured to attach over pin 1200 and to form a seal against the surface of chassis 1500 when the pin/cap assembly is attached to chassis 1500. In some embodiments, forming a seal against chassis surface 1500 prevents water, dirt, and other debris from entering through the chassis slot from the outside to the inside of the chassis. In some embodiments, choosing whether to use seal component 1300 may depend on the environment (such as the amount of water, dirt, etc. present).

It should be noted that multiple other structures and methods may be used for connecting the clip assembly to a chassis. The cap/pin, as shown and discussed here, are only one example of how to connect the fastener clip assembly to a chassis. Other types of fastener clip connections may be used and may connect to other types and shapes of slots in the chassis.

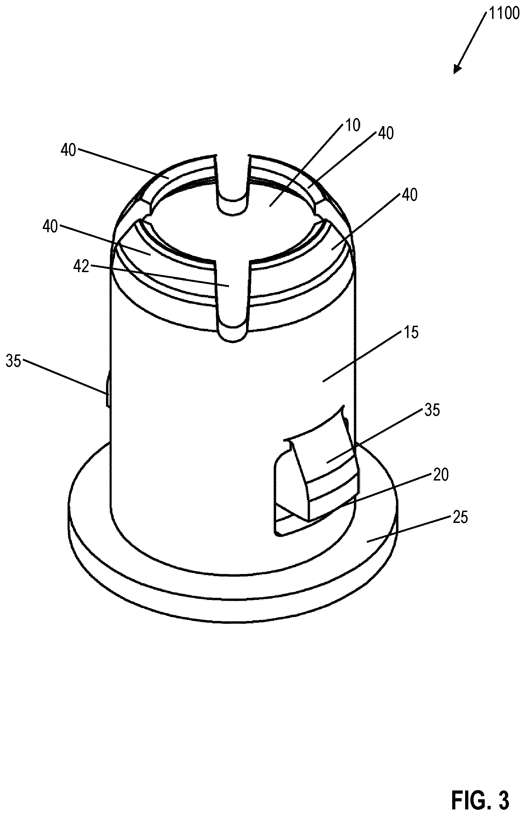

Figure 3 is a view of a cap of a fastener clip assembly, in accordance with some embodiments.

As was previously noted, the pin/ cap shown here is only one example of a structure/method to couple the fastener clip to the chassis.

In some embodiments, cap 1100 is configured to be interlocked with pin 1200, and the two-part assembly is configured to engage and attach to a slot in a chassis and in addition engage and attach to a panel.

In some embodiments, cap 1100 comprises top portion 10 from which cylinder 15 extends, ending in cap foot 25.

Cap 1100 may also include four crown portions 40 near top portion 10. Crown portions 40 are configured to bend and then snap back into position as the head of pin 1200 is inserted into cap 1100. Crown portions 40 are configured to engage a bottom surface of the head of the pin to lock the pin to the cap once the pin is inserted into the cap.

In some embodiments, small slots 42 may be placed between crown portions 40. The small slots may be configured to facilitate the bending of crown portions 40, such that the crown portions 40 can bend enough to allow for the engagement of the head of pin 1200.

In some embodiments, cap 1100 includes one or more tabs 35 (two are present in the shown embodiment) that are configured to collapse as cap 1100 is pushed into a slot in a chassis and then expand again on the other side of the chassis slot. The bottom sides 20 of tabs 35 are configured to secure cap 1100 to the slot in the chassis.

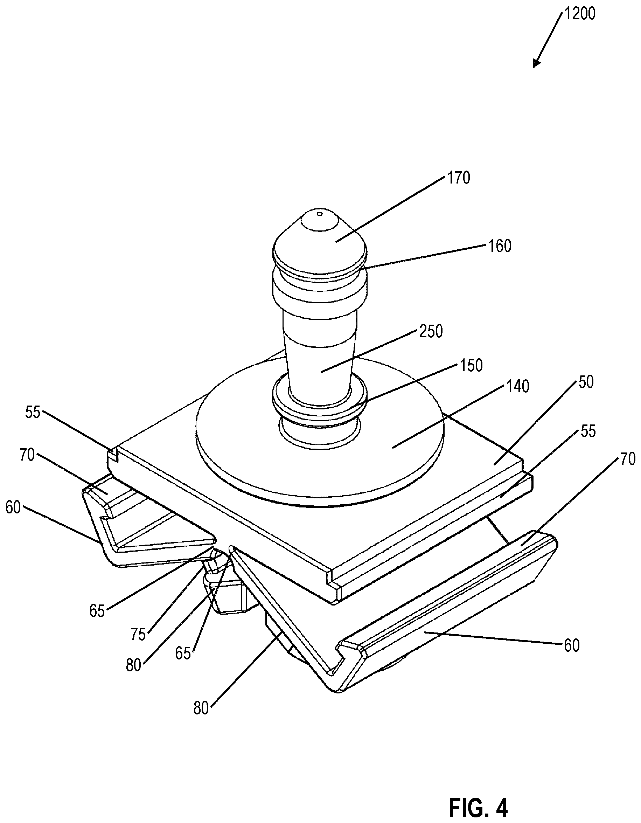

Figure 4 is a view of a pin of a fastener clip assembly with a locking panel attachment, in accordance with some embodiments.

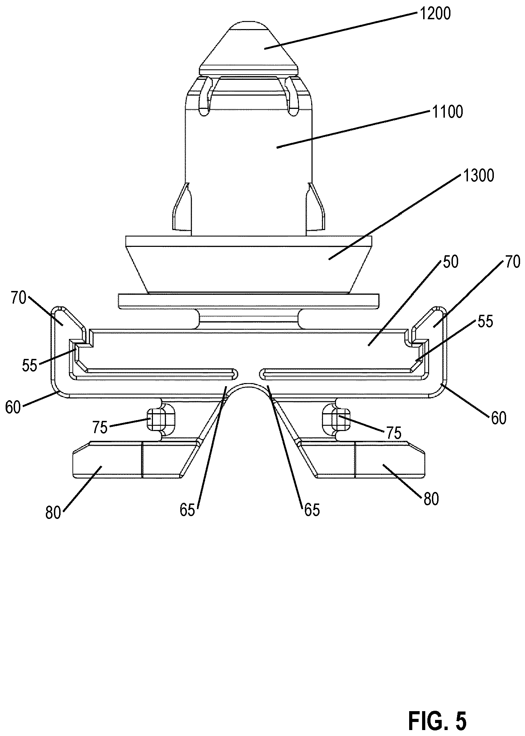

Figure 5 is a view of a fastener clip assembly in locked position, in accordance with some embodiments.

As was previously noted, the pin/cap shown here is only one example of a structure/method to couple the fastener clip to the chassis.

Pin 1200 is configured to engage and lock itself into cap 1100. Pin 1200, in some embodiments, comprises pin head 170, which is tapered and is configured to guide the pin into the cap. A bottom surface 160 of the pin head 170 is configured to engage the top of crown portions 110 of cap 1100 and to lock against them in order to prevent easy removal of the pin from the cap.

A removable seal may be configured to slide over pin 1200 through rim 250. In some embodiments, the removable seal may be secured between base disk 140 and seal retainer 150.

In some embodiments, pin 1200 is configured to be pressed into and be coupled to a slot in doghouse 1450 of panel 1400. A pair of locking arms 60 is coupled to platform 50 via a pair of living hinges 65. Living hinges 65 are configured to facilitate a rotation of locking arms 60 relative to platform 50. In other embodiments, other types of hinges may also be used. In some embodiments, living hinges 65 may be stronger and more reliable based at least upon the living hinges 65 extending across the width of platform 50.

Each of the pair of locking arms 60 is coupled to one of a pair of feet 80 whereby feet 80 are configured to rotate/move with locking arms 60 to which they are coupled.

In some embodiments, pin 1200 may be configured to be coupled to a slot in a doghouse in a panel. In some embodiments, during insertion of the pin into the panel slot the locking arms 60 are in an unlocked, down position. As such, by being in the unlocked, down position, feet 80 are configured to fit through the slot as pin 1200 is being inserted into a slot in the doghouse. As the pin 1200 is lowered into the slot, the bottom sides of locking arms 60 are configured to come into contact with the top surface of the doghouse thereby causing locking arms 60 to be pushed up toward a locked position. The pair of hooks 70 are configured to engage corresponding lips 55 on platform 50 thereby coupling locking arms 60 to platform 50.

In some embodiments, the slot in the doghouse and the locking assembly at the bottom of the pin facilitate easier initial assembly as a user or a robot initially attaching the pin to the doghouse may do so by directly pushing the pin into the slot in the doghouse compared to other configurations that may require additional motions to complete initial assembly.

In the locked position, feet 80, by rotating with locking arms 60 and by already being inside the slot in the doghouse, are configured to engage the bottom of a slot in the doghouse of a panel, thereby coupling pin 1200 to the panel.

In some embodiments, pin 1200 may be configured to float within the slot in the doghouse. Some float may be beneficial, for example, to allow for some non-precise alignment between the slot in the doghouse and the slot in the chassis due to inconsistencies in manufacturing, for example.

In some embodiments, a pair of spring fingers 75 between each of locking arms 60 and feet 80 such that spring fingers 75 may be inside the slot when pin 1200 is in its locked position. Spring fingers 75 may be configured to spring-push the fastener assembly against the inner walls of the doghouse slot. In some embodiments, spring fingers 75 are configured to provide spring action between pin 1200 and the inner walls of the slot such that the pin remains centered over the slot while concurrently providing some float for pin 1200 in the slot. As such, during insertion, pin 1200 has the highest chance of being center over the appropriate slot while still providing some float as needed.

In some embodiments, the fastener clip may be manufactured with injection molding using materials such as plastic nylon, polyoxymethylene (POM, also known as acetal), ABS, Polypropylene, rubber materials of various hardness, etc. It should be noted that different materials may be used for the different parts of the fastener clip.

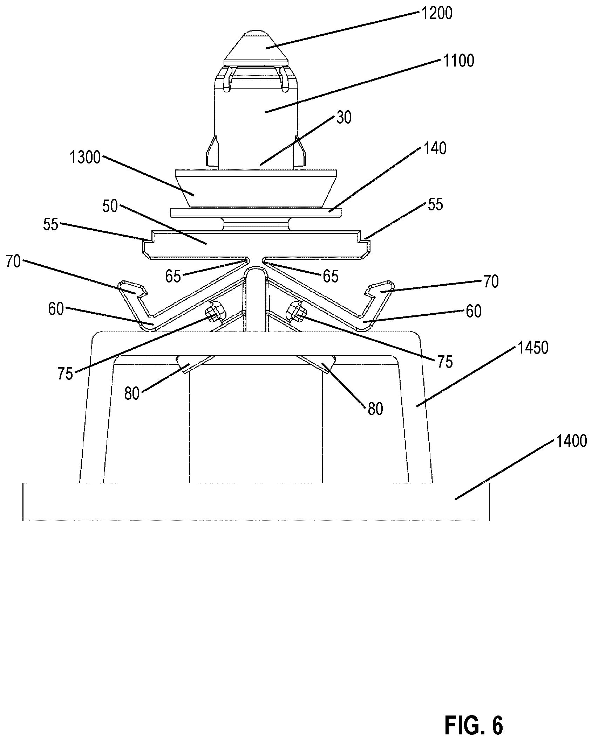

Figure 6 is an assembled view of a fastener clip assembly prior to engaging a panel, in accordance with some embodiments.

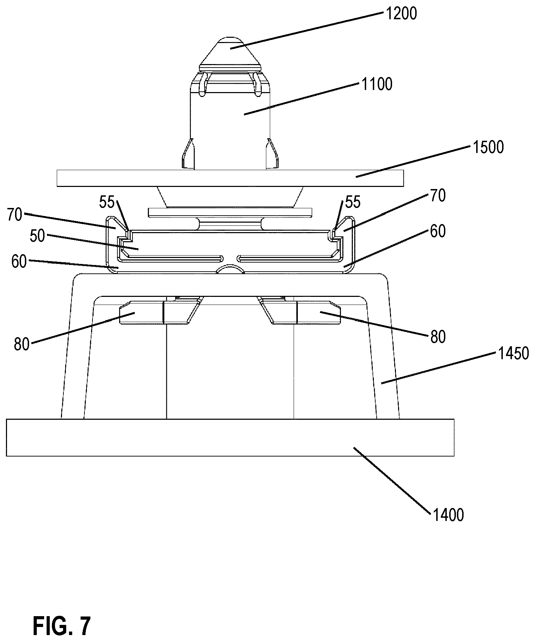

Figure 7 is an assembled view of a fastener clip assembly in an engaged position on a panel, in accordance with some embodiments.

Figure 6 shows the process of inserting the base of pin 1200 into the doghouse 1450 of panel 1400. Locking arms 60 are in the open position to facilitate the initial insertion of the pin into the slot. For example, in the open position feet 80 are configured to fit into a slot in the doghouse. Then as the pin is being pushed into the slot, the bottom surface of platform 50 is configured to engage the top of the doghouse, thereby pushing the locking arms 60 into a locked position.

Figure 7 shows the bottom of the pin coupled onto a slot in doghouse 1450 of panel 1400. In the locked position, feet 80 are in an expanded position engaging the bottom of doghouse thereby preventing the pin from separating from the doghouse. Hooks 70 are configured to engage lips 55 on platform 50, thereby maintaining the coupling of the pin to the doghouse.

One or more embodiments of the invention are described above. It should be noted that these and any other embodiments are exemplary and are intended to be illustrative of the invention rather than limiting. While the invention is widely applicable to various types of systems, a skilled person will recognize that it is impossible to include all of the possible embodiments and contexts of the invention in this disclosure. Upon reading this disclosure, many alternative embodiments of the present invention will be apparent to persons of ordinary skill in the art.

The benefits and advantages that may be provided by the present invention have been described above with regard to specific embodiments. These benefits and advantages, and any elements or limitations that may cause them to occur or to become more pronounced are not to be construed as critical, required, or essential features of any or all of the claims. As used herein, the terms "comprises," "comprising," or any other variations thereof, are intended to be interpreted as non-exclusively including the elements or limitations that follow those terms. Accordingly, a system, method, or other embodiment that comprises a set of elements is not limited to only those elements, and may include other elements not expressly listed or inherent to the claimed embodiment.

While the present invention has been described with reference to particular embodiments, it should be understood that the embodiments are illustrative and that the scope of the invention is not limited to these embodiments. Many variations, modifications, additions and improvements to the embodiments described above are possible. It is contemplated that these variations, modifications, additions and improvements fall within the scope of the invention as detailed within the following claims.

## Claims

1. A fastener clip comprising:
a top portion (10), wherein the top portion (10) is configured to be coupled to a chassis (1500),
a bottom portion, wherein the bottom portion comprises:
a platform (50);
at least a pair of locking arms (60) coupled to the platform (50) via a pair of hinges (65), wherein the hinges (65) are configured to facilitate a relative rotation between the locking arms (60) and the platform (50);
at least a pair of feet (80) coupled to the locking arms (60) and being configured to rotate with the locking arms (60),
wherein the feet (80) are configured to be partially inserted into a slot in a doghouse (1450) and, based at least on the locking arms (60) being rotated, the feet (80) are configured to rotate into the slot in the doghouse (1450) and to couple the bottom portion to the doghouse (1450),
wherein the locking arms (60) are configured to be rotated based at least on the locking arms (60) engaging a top surface of the doghouse (1450) as the fastener clip is pushed into the slot in the doghouse (1450),
wherein the locking arms (60) are configured to be coupled to the platform (50) at the end of the rotation.

2. The fastener clip of claim 1, wherein the pair of hinges (65) are a pair of living hinges.

3. The fastener clip of claim 2, wherein the pair of living hinges (65) is made of a same material as the platform (50) and the pair of locking arms (60).

4. The fastener clip of claim 1, wherein the bottom potion comprises a pair of spring fingers (75) between the pair of locking arms (60) and the pair of feet (80), wherein the pair of spring fingers (75) is configured to maintain the fastener clip centered over the slot in the doghouse (1450) based at least upon the pair of spring fingers (75) being configured to spring-push against the sides of the slot in the doghouse (1450).

5. The fastener clip of claim 4, wherein the spring fingers (75) are configured to facilitate a certain amount of float between the fastener clip and the doghouse (1450) based at least upon a spring action of the spring fingers (75).

6. The fastener clip of claim 1, wherein the pair of locking arms (60) comprises a pair of hooks (70) configured to lock the locking arms (60) to the platform (50) based at least upon the pair of hooks (70) being configured to engage a corresponding pair of lips (55) on the platform (50).

7. The fastener clip of claim 6, wherein the pair of locking arms (60) and the corresponding pair of lips (55) extend across a width of the platform (50).

8. A fastener clip assembly comprising:
a chassis (1500);
a doghouse (1450) comprising a slot;
a fastener clip comprising:
a top portion (10), wherein the top portion (10) is configured to be coupled to the chassis (1500),
a bottom portion, wherein the bottom portion comprises:
a platform (50);
at least a pair of locking arms (60) coupled to the platform (50) via a pair of hinges (65), wherein the hinges (65) are configured to facilitate a relative rotation between the locking arms (60) and the platform (50);
at least a pair of feet (80) coupled to the locking arms (60) and being configured to rotate with the locking arms (60),
wherein the feet (80) are configured to be partially inserted into the slot in the doghouse (1450) and, based at least upon the locking arms (60) being rotated, the feet (80) are configured to rotate into the slot in the doghouse (1450) and to couple the bottom portion to the doghouse (1450),
wherein the locking arms (60) are configured to be rotated based at least on the locking arms (60) engaging a top surface of the doghouse (1450) as the fastener clip is pushed into the slot in the doghouse (1450),
wherein the locking arms (60) are configured to be coupled to the platform (50) at the end of the rotation.

9. The fastener clip assembly of claim 8, wherein the pair of hinges (65) are a pair of living hinges.

10. The fastener clip assembly of claim 9, wherein the pair of living hinges (65) is made of a same material as the platform (50) and the pair of locking arms (60).

11. The fastener clip assembly of claim 8, wherein the bottom potion comprises a pair of spring fingers (75) between the pair of locking arms (60) and the pair of feet (80), wherein the pair of spring fingers (75) is configured to maintain the fastener clip centered over the slot in the doghouse (1450) based at least upon the pair of spring fingers (75) being configured to spring-push against the sides of the slot in the doghouse (1450).

12. The fastener clip assembly of claim 8, wherein the spring fingers (75) are configured to facilitate a certain amount of float between the fastener clip and the doghouse (1450) based at least upon a spring action of the spring fingers (75).

13. The fastener clip assembly of claim 8, wherein the pair of locking arms (60) comprises a pair of hooks (70) configured to lock the locking arms (60) to the platform (50) based at least upon the pair of hooks (70) being configured to engage a corresponding pair of lips (55) on the platform (50).

14. The fastener clip assembly of claim 13, wherein the pair of locking arms (60) and the corresponding pair of lips (55) extend across a width of the platform (50).

## Patentansprüche

1. Befestigungsklammer, umfassend:
ein oberen Abschnitt (10), wobei der obere Abschnitt (10) konfiguriert ist, um mit einem Chassis (1500) verbunden zu werden,
einen unteren Abschnitt, wobei der untere Abschnitt Folgendes umfasst:
eine Plattform (50);
mindestens ein Paar von Verriegelungsarmen (60), die über ein Paar Scharniere (65) mit der Plattform (50) gekoppelt sind, wobei die Scharniere (65) konfiguriert sind, um eine relative Drehung zwischen den Verriegelungsarmen (60) und der Plattform (50) zu ermöglichen;
mindestens ein Paar Füße (80), die mit den Verriegelungsarmen (60) verbunden und konfiguriert sind, um mit den Verriegelungsarmen (60) zu drehen,
wobei die Füße (80) konfiguriert sind, um teilweise in einen Schlitz in einer Einsatzöffnung (1450) eingesetzt werden können, und die Füße (80) zumindest darauf basierend, dass die Verriegelungsarme (60) gedreht werden, konfiguriert sind, um in den Schlitz in der Einsatzöffnung (1450) zu drehen und den unteren Abschnitt mit der Einsatzöffnung (1450) zu koppeln,
wobei die Verriegelungsarme (60) konfiguriert sind, um zumindest darauf basierend, dass die Verriegelungsarme (60) eine obere Fläche der Einsatzöffnung (1450) eingreifen, wenn der Befestigungsclip in den Schlitz in der Einsatzöffnung (1450) geschoben wird, gedreht zu werden,
wobei die Verriegelungsarme (60) konfiguriert sind, um am Ende der Drehung mit der Plattform (50) gekoppelt zu werden.

2. Befestigungsklammer nach Anspruch 1, wobei das Scharnierpaar (65) ein Paar Filmscharniere ist.

3. Befestigungsklammer nach Anspruch 2, wobei das Paar beweglicher Scharniere (65) aus dem gleichen Material wie die Plattform (50) und das Paar Verriegelungsarme (60) gefertigt ist.

4. Befestigungsklammer nach Anspruch 1, wobei der untere Abschnitt ein Paar Federfinger (75) zwischen dem Paar Verriegelungsarme (60) und dem Paar Füße (80) umfasst, wobei das Paar Federfinger (75) konfiguriert ist, um die Befestigungsklammer über dem Schlitz in der Einsatzöffnung (1450) zentriert zu halten, zumindest basierend darauf, dass das Paar von Federfinger (75) konfiguriert ist, um federnd gegen die Seiten des Schlitzes in der Einsatzöffnung (1450) zu drücken.

5. Befestigungsklammer nach Anspruch 4, wobei die Federfinger (75) konfiguriert sind, um ein gewisses Maß an Beweglichkeit zwischen der Befestigungsklammer und der Einsatzöffnung (1450) zumindest basierend auf einer Federwirkung der Federfinger (75) zu ermöglichen.

6. Befestigungsklammer nach Anspruch 1, wobei das Paar Verriegelungsarme (60) ein Paar Haken (70) umfasst, die konfiguriert sind, um die Verriegelungsarme (60) an der Plattform (50) zu verriegeln, zumindest basierend darauf, dass das Paar Haken (70) konfiguriert ist, um in ein entsprechendes Paar Lippen (55) an der Plattform (50) einzugreifen.

7. Befestigungsklammer nach Anspruch 6, wobei sich das Paar Verriegelungsarme (60) und das entsprechende Paar Lippen (55) über eine Breite der Plattform (50) erstreckt.

8. Befestigungsklammeranordnung, umfassend:
ein Chassis (1500);
eine Einsatzöffnung (1450), umfassend einen Schlitz;
eine Befestigungsklammer, umfassend:
einen oberen Abschnitt (10), wobei der obere Abschnitt (10) konfiguriert ist, um mit dem Chassis (1500) verbunden zu werden,
einen unteren Abschnitt, wobei der untere Abschnitt Folgendes umfasst:
eine Plattform (50);
mindestens ein Paar von Verriegelungsarmen (60), die über ein Paar Scharniere (65) mit der Plattform (50) gekoppelt sind, wobei die Scharniere (65) konfiguriert sind, um eine relative Drehung zwischen den Verriegelungsarmen (60) und der Plattform (50) zu ermöglichen;
mindestens ein Paar Füße (80), die mit den Verriegelungsarmen (60) verbunden und konfiguriert sind, um mit den Verriegelungsarmen (60) zu drehen,
wobei die Füße (80) konfiguriert sind, um teilweise in den Schlitz in der Einsatzöffnung (1450) eingeführt werden, und die Füße (80) zumindest basierend auf der Drehung der Verriegelungsarme (60) konfiguriert sind, um sich in den Schlitz in der Einsatzöffnung (1450) drehen und den unteren Abschnitt mit der Einsatzöffnung (1450) verbinden,
wobei die Verriegelungsarme (60) konfiguriert sind, um zumindest darauf basierend, dass die Verriegelungsarme (60) eine obere Fläche der Einsatzöffnung (1450) eingreifen, wenn der Befestigungsclip in den Schlitz in der Einsatzöffnung (1450) geschoben wird, gedreht zu werden,
wobei die Verriegelungsarme (60) konfiguriert sind, um am Ende der Drehung mit der Plattform (50) gekoppelt zu werden.

9. Befestigungsklammeranordnung nach Anspruch 8, wobei das Paar Scharniere (65) ein Paar Filmscharniere ist.

10. Befestigungsklammeranordnung nach Anspruch 9, wobei das Paar beweglicher Scharniere (65) aus dem gleichen Material wie die Plattform (50) und das Paar Verriegelungsarme (60) gefertigt ist.

11. Befestigungsklammeranordnung nach Anspruch 8, wobei der untere Abschnitt ein Paar Federfinger (75) zwischen dem Paar Verriegelungsarme (60) und dem Paar Füße (80) umfasst, wobei das Paar Federfinger (75) konfiguriert ist, um die Befestigungsklammer über dem Schlitz in der Einsatzöffnung (1450) zentriert zu halten, zumindest basierend darauf, dass das Paar von Federfinger (75) konfiguriert ist, um federnd gegen die Seiten des Schlitzes in der Einsatzöffnung (1450) zu drücken.

12. Befestigungsklammeranordnung nach Anspruch 8, wobei die Federfinger (75) konfiguriert sind, um ein gewisses Maß an Beweglichkeit zwischen der Befestigungsklammer und der Einsatzöffnung (1450) zumindest basierend auf einer Federwirkung der Federfinger (75) zu ermöglichen.

13. Befestigungsklammeranordnung nach Anspruch 8, wobei das Paar Verriegelungsarme (60) ein Paar Haken (70) umfasst, die konfiguriert sind, um die Verriegelungsarme (60) an der Plattform (50) zu verriegeln, zumindest basierend darauf, dass das Paar Haken (70) konfiguriert ist, um in ein entsprechendes Paar Lippen (55) an der Plattform (50) einzugreifen.

14. Befestigungsklammeranordnung nach Anspruch 13, wobei sich das Paar Verriegelungsarme (60) und das entsprechende Paar Lippen (55) über eine Breite der Plattform (50) erstreckt.

## Revendications

1. Attache de fixation comprenant :
une partie supérieure (10), dans laquelle la partie supérieure (10) est configurée pour être couplée à un châssis (1500),
une partie inférieure, dans laquelle la partie inférieure comprend :
une plateforme (50) ;
au moins une paire de bras de verrouillage (60) couplée à la plateforme (50), via une paire de charnières (65), dans laquelle les charnières (65) sont configurées pour faciliter une rotation relative entre les bras de verrouillage (60) et la plateforme (50) ;
au moins une paire de pieds (80) couplée aux bras de verrouillage (60) et étant configurée pour tourner avec les bras de verrouillage (60),
dans laquelle les pieds (80) sont configurés pour être partiellement insérés dans une fente dans un boîtier (1450), et au moins sur la base des bras de verrouillage (60) qui tournent, les pieds (80) sont configurés pour tourner dans la fente dans le boîtier (1450), et pour coupler la partie inférieure au boîtier (1450),
dans laquelle les bras de verrouillage (60) sont configurés pour être entraînés en rotation au moins sur la base des bras de verrouillage (60) qui mettent en prise une surface supérieure du boîtier (1450) lorsque l'attache de fixation est poussée dans la fente du boîtier (1450),
dans laquelle les bras de verrouillage (60) sont configurés pour être couplés à la plateforme (50) à la fin de la rotation.

2. Attache de fixation selon la revendication 1, dans laquelle la paire de charnières (65) est une paire de charnières actives.

3. Attache de fixation selon la revendication 2, dans laquelle la paire de charnières actives (65) est réalisée avec le même matériau que la plateforme (50) et que la paire de bras de verrouillage (60).

4. Attache de fixation selon la revendication 1, dans laquelle la partie inférieure comprend une paire de doigts formant ressort (75) entre la paire de bras de verrouillage (60) et la paire de pieds (80), dans laquelle la paire de doigts formant ressort (75) est configurée pour maintenir l'attache de fixation centrée sur la fente dans le boîtier (1450) au moins sur la base de la paire de doigts formant ressort (75) qui est configurée pour exercer une force de rappel contre les côtés de la fente dans le boîtier (1450).

5. Attache de fixation selon la revendication 4, dans laquelle les doigts formant ressort (75) sont configurés pour faciliter une certaine quantité de flottement entre l'attache de fixation et le boîtier (1450), au moins sur la base d'une action de rappel des doigts formant ressort (75).

6. Attache de fixation selon la revendication 1, dans laquelle la paire de bras de verrouillage (60) comprend une paire de crochets (70) configurée pour verrouiller les bras de verrouillage (60) à la plateforme (50) au moins sur la base de la paire de crochets (70) qui est configurée pour mettre en prise une paire correspondante de lèvres (55) sur la plateforme (50).

7. Attache de fixation selon la revendication 6, dans laquelle la paire de bras de verrouillage (60) et la paire correspondante de lèvres (55) s'étendent sur une largeur de la plateforme (50).

8. Ensemble attache de fixation comprenant :
un châssis (1500) ;
un boîtier (1450) comprenant une fente ;
une attache de fixation comprenant :
une partie supérieure (10), dans laquelle la partie supérieure (10) est configurée pour être couplée à un châssis (1500),
une partie inférieure, dans laquelle la partie inférieure comprend :
une plateforme (50) ;
au moins une paire de bras de verrouillage (60) couplée à la plateforme (50), via une paire de charnières (65), dans laquelle les charnières (65) sont configurées pour faciliter une rotation relative entre les bras de verrouillage (60) et la plateforme (50) ;
au moins une paire de pieds (80) couplée aux bras de verrouillage (60) et étant configurée pour tourner avec les bras de verrouillage (60),
dans laquelle les pieds (80) sont configurés pour être partiellement insérés dans une fente dans un boîtier (1450), et au moins sur la base des bras de verrouillage (60) qui tournent, les pieds (80) sont configurés pour tourner dans la fente dans le boîtier (1450), et pour coupler la partie inférieure au boîtier (1450),
dans laquelle les bras de verrouillage (60) sont configurés pour être entraînés en rotation au moins sur la base des bras de verrouillage (60) qui mettent en prise une surface supérieure du boîtier (1450) lorsque l'attache de fixation est poussée dans la fente du boîtier (1450),
dans laquelle les bras de verrouillage (60) sont configurés pour être couplés à la plateforme (50) à la fin de la rotation.

9. Ensemble attache de fixation selon la revendication 8, dans lequel la paire de charnières (65) est une paire de charnières actives.

10. Ensemble attache de fixation selon la revendication 9, dans lequel la paire de charnières actives (65) est réalisée avec le même matériau que la plateforme (50) et que la paire de bras de verrouillage (60).

11. Ensemble attache de fixation selon la revendication 8, dans lequel la partie inférieure comprend une paire de doigts formant ressort (75) entre la paire de bras de verrouillage (60) et la paire de pieds (80), dans lequel la paire de doigts formant ressort (75) est configurée pour maintenir l'attache de fixation centrée sur la fente dans le boîtier (1450) au moins sur la base de la paire de doigts formant ressort (75) qui est configurée pour exercer une action de rappel contre les côtés de la fente dans le boîtier 1450) .

12. Ensemble attache de fixation selon la revendication 8, dans lequel les doigts formant ressort (75) sont configurés pour faciliter une certaine quantité de flottement entre l'attache de fixation et le boîtier (1450) au moins sur la base d'une action de rappel des doigts formant ressort (75).

13. Ensemble attache de fixation selon la revendication 8, dans lequel la paire de bras de verrouillage (60) comprend une paire de crochets (70) configurée pour verrouiller les bras de verrouillage (60) sur la plateforme (50) au moins sur la base de la paire de crochets (70) qui est configurée pour mettre en prise une paire correspondante de lèvres (55) sur la plateforme (50).

14. Ensemble attache de fixation selon la revendication 13, dans lequel la paire de bras de verrouillage (60) et la paire correspondante de lèvres (55) s'étendent sur une largeur de la plateforme (50).
